# EUROPÄISCHE PATENTANMELDUNG

(11) **EP 1 887 739 A1**
(43) Veröffentlichungstag der Anmeldung: **13.02.2008**
(21) Anmeldenummer: 06016827.5
(22) Anmeldetag: 11.08.2006
(51) Int. Cl.: H04L 12/56

(54) **Verfahren und Vorrichtung zum Betreiben eines mobilen Kommunikationsnetzes**

(71) Anmelder: Nokia Siemens Networks GmbH & Co. KG, 81541 München (DE)
(72) Erfinder: Stadler, Thomas, 1130 Wien (AT); Unteregger, Burghard, 1040 Wien (AT)

(57) **Zusammenfassung**

Die Erfindung bezieht sich auf ein Verfahren zum Betreiben eines mobilen Kommunikationsnetzes, bei welchem zumindest eine mindestens eine Funkzelle (Cell 1, Cell 2, Cell 3) betreffende Messergebnis-Nachricht, bezeichnete vollständige Messergebnis-Nachricht (Complete Reports), für eine Rufübergabe von einer Funkzelle in eine andere Funkzelle zwischen einer Teilnehmerstation und einer Funkbasisstation innerhalb des mobilen Kommunikationsnetzes übertragen werden. Eine Messergebnis-Nachricht, die der vollständigen Messergebnis-Nachricht nachfolgt und mit verkürzter Messergebnis-Nachricht bezeichnet wird, weist zumindest einen Abschnitt mit einer Stufen-Information (Incremental Reports) resultierend auf einem Messergebnisvergleich mit einem zuvor in einer vollständigen Messergebni.s-Nachricht übertragenen Messergebnis oder in einer verkürzten Messergebnis-Nachricht übertragenen Stufen-Information auf. Die Erfindung umfasst ebenfalls Vorrichtungen zur Durchführung des oben genannten Verfahrens sowie die Darstellung einer entsprechenden Messergebnis-Nachricht.

## Beschreibung

Die Erfindung betrifft ein Verfahren sowie Vorrichtungen zum Betreiben eines mobilen Kommunikationsnetzes gemäß des Oberbegriffs der unabhängigen Patentansprüche, bei welchem zumindest eine Funkzelle betreffende Messergebnis-Nachricht für eine Rufübergabe von einer Funkzelle in eine andere Funkzelle zwischen einer Teilnehmerstation und einer Funkbasisstation innerhalb eines mobilen Kommunikationsnetzes übertragen wird.

Um möglichst aktuelle Ergebnisse in Bezug auf Nachbarzellenmessungen zu erhalten, die für einen optimierten Handover-Prozess (Rufübergabe-Prozess) in einem mobilen Kommunikationsnetz notwendig sind, werden insbesondere in 2G/3G-Systemen eine bestimmte Anzahl von Uplink-Ressourcen (Ressourcen in Aufwärtsübertragungsrichtung) reserviert. Dabei werden auf den Signalisierungskanälen die Messergebnisse mittels Messergebnis-Nachrichten bereitgestellt. Um den Verbrauch von solchen Ressourcen möglichst gering zu halten, ist es vernünftig, lange ausführliche Messergebnis-Berichterstattung innerhalb kurzer Perioden zu vermeiden. Hierzu werden eine vorzugsweise ereignisgesteuerte Berichterstattung bzw. eine periodisch in zeitlichen Abständen erfolgende Messergebnis-Übertragung eingesetzt.

In zukünftigen Mobilfunksystemen, so-genannten Long Term Evolution (LTE) Systemen, werden dieselben bzw. ähnliche Messergebnis-Berichterstattungsmechanismen angewendet werden. Im Hinblick auf Standardisierungen werden derzeit folgende Anforderungen bzw. Ansätze diskutiert bzw. vorgeschlagen:
- Die Signalisierungsanforderungen werden sinken, da jede Ressource, die nicht von einer bestimmten Teilnehmerstation genutzt wird, von einer anderen Teilnehmerstation durch Mittel des so-genannten Uplink Shared Channels (UL-SCH) genutzt werden kann.
- Das so-genannte Handover - wie es derzeit in 2G/3G-Systemen eingesetzt ist - soll im Hinblick auf Ressourcennutzung und Verzögerungszeiten verbessert werden, da die entscheidende Instanz (eNodeB = evolved NodeB/Basisstation) ein Randknotenpunkt ist, der sowohl eine Signalisierung auf höheren als auch niedrigeren Schichten innerhalb einer einzigen physikalischen Einheit empfangen kann.
- Da es in der Basisarchitektur keine zentrale Steuereinheit zur Koordinierung der Ressourcen geben wird, wird ein Quellknoten von einem Zielknoten über ein sogenanntes X2-Interface Ressourcen für einen Handover-Prozess anfordern. Die Auswahl des Zielnetzknotens basiert dann auf Messergebnis-Nachrichten, die von einer Teilnehmerstation übertragen werden.

Für den Fall, dass ein völlig überlasteter Zielnetzknoten eine Handover-Annahme abweisen sollte, wird der Quellnetzknoten einen anderen Zielnetzknoten (den zweitbesten) für den Handover-Prozesses auswählen und Ressourcen anfordern, um den von einer Teilnehmerstation kommenden Ruf oder Dienst nicht abweisen zu müssen. Dies beansprucht Zeit und fordert eine zuverlässige Vorhersage über mögliche Handover-Kandidaten, um dem Quellnetzknoten solche Aufgaben im Voraus zu ermöglichen. Dies wird natürlich am besten funktionieren, wenn die Messergebnisse möglichst genau und aktuell gehalten sind.

Wie vorstehend bereits erwähnt, ist in bisherigen 2G/3G-Systemen eine gewisse Anzahl an Uplink-Ressourcen für die Messergebnis-Berichterstattung auf Signalisierungskanälen reserviert. Um diese Nutzung der Ressourcen gering zu halten, wird derzeit eine ereignisgesteuerte Messergebnis-Berichterstattung bzw. eine in zeitlichen periodischen Abständen erfolgende Messergebnis-Übertragung eingesetzt.

Demnach besteht die Aufgabe der Erfindung darin, ein Verfahren bzw. Vorrichtungen der im Oberbegriff des Patentanspruches 1 angegebenen Art dahingehend auszugestalten, dass der Zeit- und Ressourcenverbrauch bei der Übertragung von Messergebnissen in Form von Messergebnis-Nachrichten optimiert wird.

Diese Aufgabe wird durch die im Kennzeichen der unabhängigen Patentansprüche angegebenen Merkmale gelöst. Vorteilhafte Weiterbildungen der Erfindung sind in den abhängigen Patentansprüchen angegeben.

Messergebnis-Nachrichten gemäß des Oberbegriffs werden im folgenden als vollständige Messergebnis-Nachrichten bezeichnet.

Ein wesentlicher Aspekt der Erfindung besteht darin, dass Messergebnis-Nachrichten übertragen werden, die zumindest eine der vollständigen Messergebnis-Nachricht nachfolgende Messergebnis-Nachricht einen Abschnitt mit einer Stufeninformation resultierend auf einen Messergebnis-Vergleich mit einem zuvor in einer vollständigen Messergebnis-Nachricht übertragenen Messergebnis oder in einer verkürzten Messergebnis-Nachricht übertragenen Stufen-Information aufweist.

Demnach richtet sich die Stufen-Information entweder nach dem Messergebnis, das mit einer initiierenden bzw. herkömmlicherweise übertragenen vollständigen Messergebnis-Nachricht, oder wird gemäß einer zuvor in einer verkürzten Messergebnis-Nachricht bereits übertragenen Stufen-Information angepasst.

Diese Stufeninformation kann vorzugsweise mindestens zwei Stufen aufweisen. Von Vorteil ist es, wenn die mindestens zwei Stufen zumindest einen inkrementellen Teil und einen dekrementellen Teil umfassen. Des Weiteren kann die Stufengröße der Stufeninformation voreingestellt sein oder variabel dynamisch eingestellt werden. Besonders günstig ist es, wenn die Stufeninformation in einem Bitfeldabschnitt der genannten Messergebnis-Nachricht implementiert ist. Hierbei kann sich eine Position im Bitfeld auf eine Position einer Messergebnis-Liste in einer zuvor übertragenen vollständigen Messergebnis-Nachricht beziehen. Eine solche Messergebnis-Liste umfasst normalerweise Messergebnisse zu Funkzellen, die für eine Rufübergabe geeignet sind. Sofern die Messergebnis-Nachrichten vorzugsweise auf der physikalischen Schicht übertragen werden, kann der Abschnitt der Stufeninformation zusammen mit einem Kanal-Qualität-Indikator (CQI = channel quality indication) übertragen werden. Auch kann der Abschnitt der Stufen-Information im Kopfteil einer verkürzten Messergebnis-Nachricht implementiert sein. Des Weiteren können die Messergebnis-Nachrichten auch in der so genannten Medium Access Control Schicht (MAC) übertragen werden. Zweckmäßigerweise können die Messergebnis-Nachrichten (vollständig und/oder verkürzt) in periodisch zeitlichen Abständen oder ereignisgesteuert übertragen werden.

Um das Betreiben eines mobilen Kommunikationsnetzes im Hinblick auf die Übertragung von Messergebnis-Nachrichten unterstützen zu können, sind entsprechende Kommunikationseinrichtungen, vorzugsweise ein Kommunikationsnetz mit mindestens einer Funkbasisstation und mindestens einer Teilnehmerbasisstation bereitgestellt. Ebenfalls trägt die Darstellung einer Messergebnis-Nachricht der oben genannten Art zur Implementierung der Erfindung bei.

Die Erfindung weist folgende Vorteile auf:
- Die Zeitperioden zwischen einer Übertragung von vollständigen Messergebnis-Nachrichten bzw. Berichten können verlängert werden, ohne wertvolle Informationen zu verlieren.
- Speziell am Zellrand, an dem Handover-Messberichte besonders kritisch sind, kann das häufige Übertragen von vollständigen Messergebnis-Nachrichten vermieden werden. Dies ist vorteilhaft, da am Zellrand die erzeugte Zwischenzell-Interferenz am höchsten ist und eine Limitierung der Sendeleistung im Hinblick auf andere Verkehrsdaten, z.B. Echtzeitverkehr wie Voice over IP, am kritischsten ist.
- Für die gleiche Anzahl als für eine vollständige Messergebnis-Nachricht (RRC Report = Radio Resource Control Report) können ungefähr 20 Messergebnis-Nachrichten mit Stufeninformationen (verkürzte Messergebnis-Nachrichten) übertragen werden, um einem Netzknoten zur gleichen Zeit ein detailliertes Bild über die Ausrichtung der Messergebnisse zu liefern, die ansonsten nur über sehr kurze vollständige Messergebnis-Nachrichten (RRC Report) erreicht werden können.
- Aufgrund der Granularität der Uplink-Übertragungsblockgröße ist das Einschließen kleiner Stufeninformationen in die Messergebnis-Nachrichten gegenüber Fülleinheiten bzw. Füllbits zu bevorzugen. Gibt es kein Fülleinheiten bzw. Füllbits, dann ist eine periodisch zeitgesteuerte Übertragung zu bevorzugen. Eine zeitgesteuerte Übertragung kann auch dann verwendet werden, wenn keine Uplink-Übertragungsblöcke zu übertragen sind. Dies kann der Fall sein z.B. in einer inaktiven Phase oder in so-genannten DRX/DTX-Perioden (DRX= Discontinuous Reception, DTX= Discontinuous Transmission) in einer Teilnehmerstation.
- Am Zellrand wird die Übertragungsleistung einer Teilnehmerstation aufgrund der zur Verfügung stehenden Uplink-Bandbreite und aufgrund der vorhandenen Nachbarzell-Interferenz beschränkt. So kann das Zusammenfassen von Messergebnis-Nachrichten, wie es erfindungsgemäß durchgeführt wird, über eine hohe Anzahl an Übertragungen negative Effekte auf die Messergebnis-Nachrichten vermindern.
- Ein umsichtiger Gebrauch der Uplink-Signalisierungskanäle kann durch wenig hinzugefügte Informationen zur Optimierung des Uplink-Scheduling-Verfahrens (d.h. verschiedene Prioritäts-Warteschlangen (Queues) für den Signalisierungs- und Nutzverkehr zu verwenden) beitragen.
- Ein vorhersehbarer bzw. vorher einschätzbarer Handover-Mechanismus basierend auf der erfindungsgemäßen schnellen verkürzten Messergebnis-Berichterstattung, kann durch das so-genannte HARQ-Schema (HARQ = Hybrid Automatic Repeat Request) auf dem Uplink-Signalisierungskanal, das eine sehr hohe Verfügbarkeit und Sicherheit der Verkehrsübertragung garantiert, sichergestellt werden.

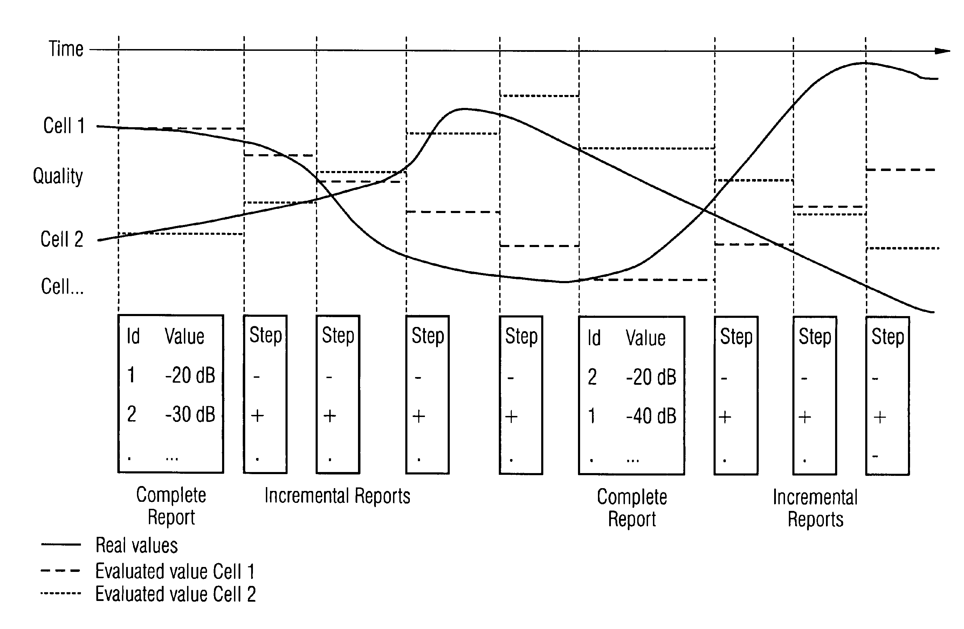

Weitere Einzelheiten der Erfindung werden in einem Ausführungsbeispiel, das unter anderem in der Zeichnung dargestellt ist, näher erläutert.

Die Figur zeigt schematisch Teile von Messergebnisnachrichten. Mit "Complete Report" bezeichnet, wird zumindest ein Teil einer vollständigen Messergebnis-Nachricht skizziert, konkrete Messergebnis-Werte z.B. -20 dB, -30 dB umfasst. Mit "Incremental Reports" bezeichnet, wird zumindest ein Teil einer verkürzten Messergebnis-Nachricht skizziert, die eine Stufen-Information, die in der Figur mit inkrementellen/dekrementellen Zeichen wie +/- angedeutet ist, umfäßt

Desweiteren werden in der Figur eine Zeitlinie "Time" sowie Messergebniswerte von Zellen "Cell 1, Cell 2, Cell 3" und Qualitätswerte "Quality" (z.B. CQI = channel quality indication) gezeigt.

Die Messergebniswerte werden mit verschiedartigen Kurven dargestellt:
Reale Werte (Real values) sind mit einer durchgezogenen Linie, ermittelte Zelle 1-Werte (Evaluated value Cell 1) mit einer gestrichelten Linie und ermittelte Zelle 2-Werte (Evaluated value Cell 2) mit einer gepunkteten Linie dargestellt.

Die erfindungsgemäße Lösung besteht im Wesentlichen aus zwei Mechanismen:
1. Mechanismen, wie sie bereits in der eingangs erläuterten Art im Hinblick auf eine vollständige Messergebnis-Nachrichtübertragung (RRC Report) existieren, z.B.:
   - eine periodisch in zeitlichen Abständen erfolgende Messergebnis-Nachrichtübertragung,
   - eine ereignisgesteuerte Übertragung der Ergebnisnachrichten.
   Bemerkung: In den Messergebnis-Nachrichten werden die Ergebnisse für eine Anzahl von Funkzellen in Form einer Liste (wie es z.B. in UTRAN (UMTS Terrestrial Radio Access Network) der Fall ist) dargestellt. Die Anzahl der Messergebnisse soll hierbei möglichst gering gehalten werden (z.B. < 6), um die Messergebnis-Nachrichten möglichst klein zu halten, da sowohl ein Zell-Identifikator als auch die mit der jeweiligen Funkzelle in Zusammenhang stehenden aktuellen Messergebnisse zu übertragen sind. Zusammen mit den so-genannten Overhead von Messergebnis-Nachrichten ergibt sich eine Nachrichtengröße von ungefähr > 80 Bits pro Nachricht (z.B. 5* (cell-ID(5) + Verlust (7)).
2. Das erfindungsgemäße Schema der Messergebnis-Nachrichten, umfassend zumindest einen Abschnitt mit einer Stufeninformation, wird vorzugsweise auf der so genannten MAC-Schicht bzw. auf der physikalischen Schicht übertragen. Sofern die Messergebnis-Nachrichten auf der MAC-Schicht übertragen wird, wird der Abschnitt der Stufeninformation vorzugsweise im Kopfteil einer Nachricht übertragen. Sofern die Messergebnis-Nachricht auf der physikalischen Schicht übertragen wird, wird der Abschnitt der Stufeninformation vorzugsweise zusammen mit einem Kanal-Qualitäts-Indikator (CQI = channel quality indication) übertragen.

Um die letzte vollständige Messergebnis-Nachricht verfolgen zu können, wird eine bestimmte Anzahl von Bits verwendet, um Signaländerungen in den berichteten Zellmessergebniswerten zu kennzeichnen. Vorzugsweise umfasst die Stufeninformation mindestens zwei Stufen in Form eines inkrementellen bzw. dekrementellen Teils: Z.B. drei Stufen (eine Stufe höher - keine Änderung - eine Stufe niedriger) oder zwei Stufen (eine Stufe höher - eine Stufe niedriger) werden pro Funkzelle signalisiert.

Diese Information wird vorzugsweise in einem Bitfeld implementiert. Dadurch werden die Messergebnis-Nachrichten kurz gehalten, wodurch eine Zeitersparnis und Ressourcenersparnis in der Übertragung erzielt wird. Zweckmäßigerweise kann die Position in einem solchen Bitfeld mit einer Position in einer in der vollständigen Messergebnis-Nachricht vorhandenen Liste korrespondieren. Das Bitfeld wird vorzugsweise im so-genannten MAC-Header (MAC = Medium Access Control) auf einen Uplink-Signalisierungs-Channel übertragen. Alternativ können diese Messergebnis-Nachrichten auch auf einen physikalischen Kanal zusammen z.B. mit einem Kanal-Qualitäts-Indikator (CQI) übertragen werden. Wenn z.B. vier Bits (16 Stufen) verwendet werden, kann die Information für eine Anzahl von fünf Zellen mit drei Stufen codiert bzw. decodiert werden. Dadurch werden die wahrscheinlich besten Zellkandidaten für den Handover-Prozess abgedeckt.
Bemerkung: Vorzugsweise werden hier so-genannte Intra-Frequenz-Messergebnis-Nachrichten in Erwägung gezogen, da dies die meist stattfindenden Handover-Prozesse abdeckt. Jedoch sind erweiterte Mechanismen des erfindungsgemäßen Vorgehens (Inter-Frequenz bzw. Inter-RAT (Radio Access Technology)) nicht ausgeschlossen. Die Stufengröße in der Stufeninformation kann entweder voreingestellt sein oder vorzugsweise mit einer kleinen Größe konfigurierbar sein, um verschiedene Anwendungen, z.B. Macro-, Micro-, Pico-Zellen, zu ermöglichen.

## Patentansprüche

1. Verfahren zum Betreiben eines mobilen Kommunikationnetzes, bei welchem zumindest eine mindestens eine Funkzelle (Cell 1, Cell 2, Cell 3) betreffende Messergebnis-Nachricht, bezeichnete vollständige Messergebnis-Nachricht (Complete Report), für eine Rufübergabe von einer Funkzelle in eine andere Funkzelle zwischen einer Teilnehmerstation und einer Funkbasisstation innerhalb des mobilen Kommunikationsnetzes übertragen werden **dadurch gekennzeichnet, dass** zumindest eine der vollständigen Messergebnis-Nachricht nachfolgende Messergebnis-Nachricht, bezeichnete verkürzte Messergebnis-Nachricht, zumindest einen Abschnitt mit einer Stufen-Information (Incremental Reports) resultierend auf einem Messergebnisvergleich mit einem zuvor in einer vollständigen Messergebnis-Nachricht übertragenen Messergebnis oder in einer verkürzten Messergebnis-Nachricht übertragenen Stufen-Information aufweist.

2. Verfahren nach Anspruch 1, bei dem die Stufen-Information mindestens zwei Stufen aufweist.

3. Verfahren nach Anspruch 2, bei dem die mindestens zwei Stufen zumindest einen inkrementellen Teil und einen dekrementellen Teil aufweist.

4. Verfahren nach einem der vorhergehenden Ansprüche, bei dem die Stufengröße der Stufen-Information voreingestellt ist.

5. Verfahren nach einem der vorhergehenden Ansprüche, bei dem die Stufengröße der Stufen-Information variable eingestellt werden kann.

6. Verfahren nach einem der vorhergehenden Ansprüche, bei dem die Stufen-Information in einem Bit-Feld-Abschnitt der genannten verkürzten Messergebnis-Nachricht bereitgestellt wird.

7. Verfahren nach Anspruch 6, bei dem sich eine Position im Bit-Feld einer verkürzten Messergebnis-Nachricht auf eine Position einer Messergebnis-Liste in einer zuvor übertragenen vollständigen Messergebnis-Nachricht bezieht.

8. Verfahren nach einem der vorhergehenden Ansprüche, bei dem der Abschnitt der Stufen-Information zusammen mit einem Kanal-Qualitäts-Index (Quality) übertragen wird.

9. Verfahren nach einem der vorhergehenden Ansprüche, bei dem die vollständigen und/oder verkürzten Messergebnis-Nachrichten auf der physikalischen Schicht übertragen werden.

10. Verfahren nach einem der vorhergehenden Ansprüche, bei dem der Abschnitt der Stufen-Information im Kopfteil einer verkürzten Messergebnis-Nachricht bereitgestellt wird.

11. Verfahren nach einem der vorhergehenden Ansprüche, bei dem die vollständigen und/oder verkürzten Messergebnis-Nachrichten in der MAC-Schicht übertragen werden.

12. Verfahren nach einem der vorherigen Ansprüche, bei dem die vollständigen und/oder verkürzten Messergebnis-Nachrichten in periodisch zeitlichen Abständen übertragen werden.

13. Verfahren nach einem der vorherigen Ansprüche, bei dem die vollständigen und/oder verkürzten Messergebnis-Nachrichten ereignis-gesteuert übertragen werden.

14. Kommunikationseinrichtung zur Durchführung des Verfahrens nach einem der vorhergehenden Ansprüche, aufweisend Mittel zur Bereitstellung und/oder Empfang einer Messergebnis-Nachricht, die zumindest einen Abschnitt mit einer Stufen-Information (Incremental Reports) resultierend auf einem Messergebnisvergleich mit einem zuvor in einer Messergebnis-Nachricht (Complete Report) übertragenen Messergebnis oder Stufen-Information.

15. Funkbasisstation in einem mobilen Kommunikationsnetz aufweisend eine Kommunikationseinrichtung nach Anspruch 14.

16. Teilnehmerstation in einem mobilen Kommunikationsnetz aufweisend eine Kommunikationseinrichtung nach Anspruch 14.

17. Mobiles Kommunikationsnetz aufweisend wenigstens eine Kommunikationseinrichtung nach Anspruch 14.

18. Messergebnis-Nachricht, insbesondere zur Verwendung in einem mobilen Kommunikationsnetz aufweisend zumindest einen Abschnitt mit einer Stufen-Information (Incremental Reports) resultierend auf einem Messergebnisvergleich mit einem zuvor in einer Messergebnis-Nachricht übertragenen Messergebnis oder Stufen-Information.

19. Messergebnis-Nachricht nach Anspruch 18, bei der die Stufen-Information mindestens zwei Stufen aufweist.

20. Messergebnis-Nachricht nach einem der Ansprüche 18 bis 19, bei der die mindestens zwei Stufen zumindest ein inkrementellen Teil und einen dekrementellen Teil aufweist.

21. Messergebnis-Nachricht nach einem der Ansprüche 18 bis 20, bei der die Stufen-Information in einem Bit-Feld-Abschnitt der Messergebnis-Nachricht implementiert ist.

22. Messergebnis-Nachricht nach Anspruch 21, bei der sich eine Position im Bit-Feld auf eine Position einer Messergebnis-Liste in einer zuvor übertragenen Messergebnis-Nachricht bezieht.

23. Messergebnis-Nachricht nach einem der Ansprüche 18 bis 22, bei der der Abschnitt der Stufen-Information im Kopfteil der Messergebnis-Nachricht implementiert ist.
